# EUROPEAN PATENT APPLICATION

(11) **EP 1 842 722 A2**
(43) Date of publication of application: **10.10.2007**
(21) Application number: 07105499.3
(22) Date of filing: 02.04.2007
(51) Int. Cl.: B60P 3/39

(54) **Bed for recreational vehicles, particularly for caravans, campervans, such as truck campers, motorhomes and the like**

(30) Priority: 07.04.2006 IT BO20060034 U
(71) Applicant: Di Mario, Giuseppe, 47015 Modigliana FC (IT)
(72) Inventor: Di Mario, Giuseppe, 47015 Modigliana FC (IT)
(74) Representative: Modiano, Micaela Nadia

(57) **Abstract**

A bed (1) for recreational vehicles, comprising a frame composed of a first frame half (2), which is supported inside the motor vehicle and comprises two parallel longitudinal members (4, 5) provided with seats (8) in which the opposite ends of strips (9) engage, the strips forming part of a supporting surface for a mattress or the like, and a second frame half (3), which is provided with two parallel longitudinal members (15, 16) which are associated telescopically with the longitudinal elements (4, 5) of the first frame half (2), the longitudinal members (15, 16) of the second frame half (3) being provided with slots (19) which are engaged by the opposite ends of strips (20) which form the remaining part of the supporting surface for the mattress, the second frame half (3) being movable with respect to the first frame half (2) between a first position in which the frame halves (2, 3) form an elongated surface and a second position in which the frame halves (2, 3) mutually interpenetrate so as to form a supporting surface which as a whole is shorter than in the first position.

## Description

The present invention relates to a bed for recreational vehicles, particularly for caravans, campervans such as truck campers, motorhomes and the like.

In vehicles of the indicated type, particularly those provided with a roof extension, i.e., a roof which can be raised to extend the living space, the bed hangs from the roof by means of two arms which are articulated in a parallelogram configuration so that it can be raised according to operating requirements.

However, often it is necessary to reduce the space occupation of the beds in the lowered position, for example in order to use the interior of the vehicle temporarily for another purpose, for example to have space available to perform certain activities or to temporarily accommodate bulky objects.

The aim of the present invention is to provide a bed which is conceived so that it can be reduced to less bulky dimensions.

Within this aim, an object of the present invention is to provide a bed which has a simple structure, can be provided by way of traditional methods and by means of materials which are easily commercially available so that it is cheap and accessible to a wide range of potential customers.

Another object of the present invention is to provide a bed which has a structure suitable to be used in recreational vehicles such as caravans, truck campers, motorhomes and the like.

This aim and these and other objects which will become better apparent hereinafter are achieved with a bed for recreational vehicles, which is characterized in that it comprises a frame which is composed of a first frame half, which is supported inside the motor vehicle and comprises two parallel longitudinal members provided with seats in which the opposite ends of strips engage, said strips forming part of a supporting surface for a mattress or the like, and a second frame half, which is provided with two parallel longitudinal members which are associated telescopically with the longitudinal elements of said first frame half, the longitudinal members of said second frame half being provided with seats which are engaged by the opposite ends of strips which form the remaining part of the supporting surface for said mattress, said second frame half being movable with respect to said first frame half between a first position in which said frame halves form an elongated surface and a second position in which said frame halves mutually interpenetrate so as to form a supporting surface which as a whole is shorter than in the first position.

Further characteristics and advantages of the present invention will become better apparent from the following detailed description of a preferred but not exclusive embodiment thereof, illustrated by way of nonlimiting example in the accompanying drawings, wherein:
Figure 1 is a perspective view of the bed in the elongated condition;
Figure 2 is a sectional view, taken along the line II-II of Figure 1;
Figures 3, 4 and 5 are three partial side views of the bed in three successive operating positions.

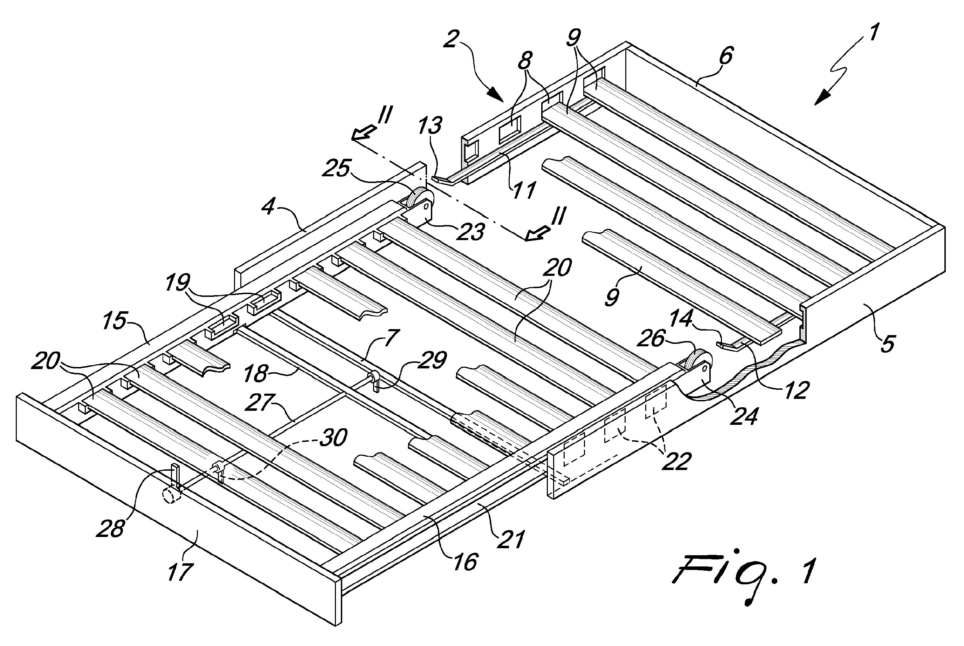

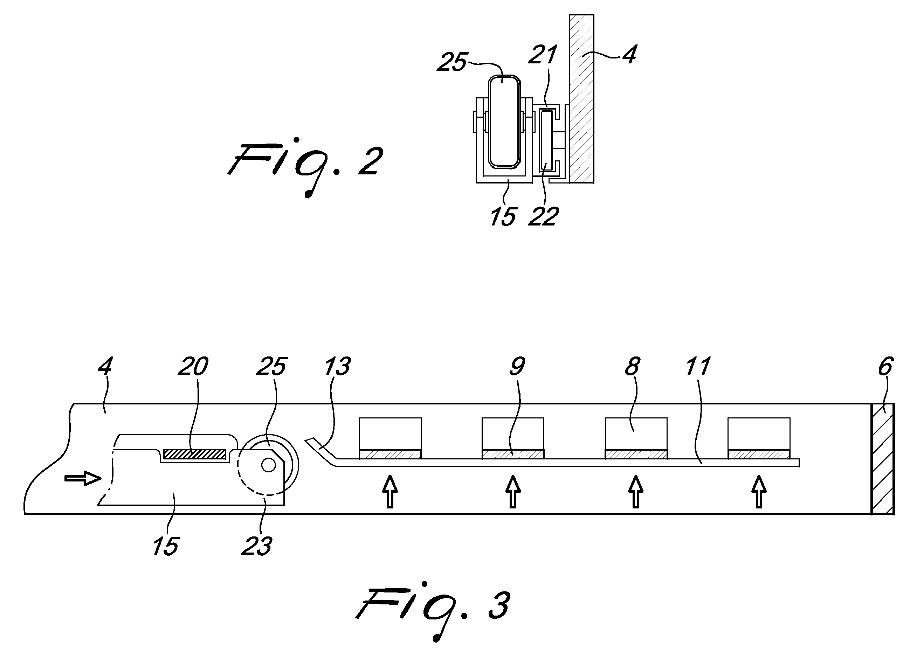

With reference to Figures 1 and 2, a bed is generally designated by the reference numeral 1 and is composed substantially of a first frame half 2 and a second frame half 3, which is associated telescopically with the first frame half 2 in the manner described hereinafter.

The frame half 2 is constituted by two longitudinal members 4, 5 which are joined at one end by a cross-member 6 and at the opposite end by a bar 7. Conveniently, the longitudinal members 4, 5 and the cross-member 6 are constituted by tubular profiled elements having a rectangular cross-section.

Equidistant openings are formed in the mutually opposite faces of the longitudinal members 4, 5 and along part of their length and constitute the seats 8, in which the opposite end portions of parallel strips 9 engage; such strips are constituted in practice by battens (commonly known as slats) which form part of the supporting surface of the mattress that the bed must support.

The accesses to the seats 8 are shaped like a rectangle which is as wide as the width of the strips and higher than the height of the strips. In this manner, the strips 9 can be lifted with respect to the normal position in which they rest on the lower edge of the seats 8.

Below the strips 9, at their opposite ends and adjacent to the internal faces of the longitudinal members 4, 5, there are two rails 11, 12, the end portions 13, 14 of which, directed toward the frame half 3, are folded upward. The strips 9 are fixed above the rails 11, 12, so that by acting on the rails from below it is possible to lift simultaneously, by a certain extent, all the strips inside the seats 8.

The frame half 3 has a rectangular structure whose dimensions are such that it can be inserted between the longitudinal members 4, 5 of the frame half 2 and slide between them. For this purpose, the frame half 3 is composed of a pair of parallel longitudinal members 15, 16, which are mutually connected, at the end that remains outside the frame half 2, by a cross-member 17 and, in an intermediate position, by a bar 18.

Slots 19 are provided in the longitudinal members 15, 16, and the opposite ends of additional strips 20 are inserted therein, forming the remaining part of the supporting surface of the mattress.

Respective profiled elements 21 are rigidly coupled to the sides of the longitudinal members 15, 16 and have a C-shaped cross-section which is open outward (Figure 2). The profiled elements 21 act as guiding tracks for gliding rollers 22 which are mounted in a cantilever fashion within the longitudinal members 4, 5 so as to allow to move the frame half 3 with respect to the frame half 2.

Respective brackets 23, 24 protrude from the heads of the longitudinal members 15, 16 that lie opposite the cross-member 17, and two wheels 25, 26 aligned with the rails 11, 12 are supported in the brackets.

From what has been described above, it is evident that in the condition for using the bed, the two frame halves 2, 3 are extracted with respect to each other so that the supporting surface formed by the strips 20 lies on the same level and is added to the surface formed by the strips 9, so that the dimensions of the bed correspond to the dimensions of the mattress being used (Figure 3).

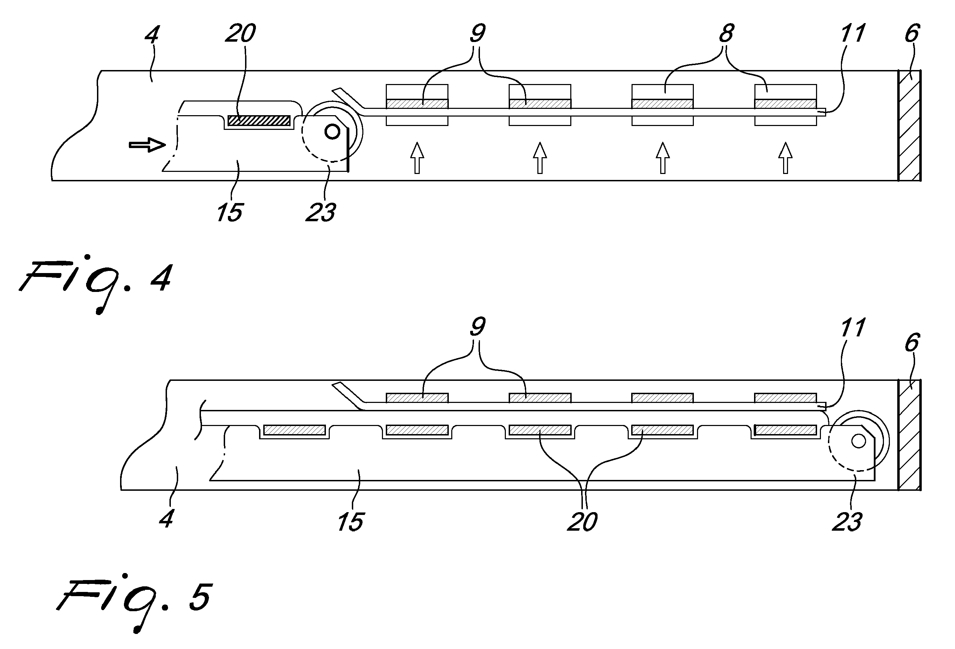

When one wishes to reduce the dimensions of the bed to recover space inside the motor vehicle, the frame half 3 is pushed inside the frame 2 so that the wheels 25, 26, after being inserted under the end portions 13, 14 which act as guiding surfaces (Figure 4), lift the rails 11, 12, allowing the strips 20 to be arranged below the strips 9 (Figure 5). The overall dimensions of the bed can thus be reduced by an extent which is equivalent to the extent to which the frame half 3 enters the frame half 2.

As is evident, the described invention perfectly achieves the proposed aim and objects. In particular, it should be noted that the bed maintains the usual prerogatives of installation within a motor vehicle without having to resort to special solutions.

Advantageously, according to a different embodiment of the invention, means are provided which are adapted to lock one frame half with respect to the other. Such means, as shown in Figure 1, comprise a rod 27, which is parallel to the longitudinal members 15, 16 and whose opposite ends are supported in the cross-member 17 and in the bar 18 and are provided with a radial arm 28, which acts as a handle, and with a second radial arm 29, which acts as a bolt. In the elongated condition of the bed, by actuating the handle 28 it is possible to turn the arm 29 into a position for blocking the bar 7, so as to block any movement of the frame half 3 with respect to the frame half 2. Likewise, it is possible to lock the frame half 3, after inserting it in the frame half 2, by turning an additional arm 30 into a position for engaging the cross-member 7 or another suitable element fixed thereto.

In the practical embodiment of the invention, numerous other modifications and variations are possible, and all are within the scope of the appended claims. For example, the strips 9 of the frame half 2 can be fixed and liftable strips can be provided in the sliding frame half 3.

The disclosures in Italian Utility Model Application No. BO2006U000034 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A bed for recreational vehicles, **characterized in that** it comprises a frame composed of a first frame half, which is supported inside the motor vehicle and comprises two parallel longitudinal members provided with seats in which the opposite ends of strips engage, said strips forming part of a supporting surface for a mattress or the like, and a second frame half, which is provided with two parallel longitudinal members which are associated telescopically with the longitudinal elements of said first frame half, the longitudinal members of said second frame half being provided with slots which are engaged by the opposite ends of strips which form the remaining part of the supporting surface for said mattress, said second frame half being movable with respect to said first frame half between a first position in which said frame halves form an elongated surface and a second position in which said frame halves mutually interpenetrate so as to form a supporting surface which as a whole is shorter than in the first position.

2. The bed according to claim 1, **characterized in that** the longitudinal members of said first frame half are constituted by tubular profiled elements, in the opposite faces of which there are substantially rectangular openings which constitute seats in which the opposite end portions of parallel strips, which are part of said supporting surface of the mattress, engage, said openings being suitable to allow the lifting of said strips with respect to the ordinary mattress supporting surface.

3. The bed according to claim 1, **characterized in that** at the opposite ends of said strips and adjacent to the internal faces of the longitudinal members of said first frame half there are two rails, in which the end portion that is directed toward said second frame half is folded upward, said strips being fixed above said rails so that by acting on said rails from below it is possible to lift simultaneously all the strips inside said seats.

4. The bed according to claim 1, **characterized in that** said second frame half comprises two parallel longitudinal members, to the sides of which respective profiled elements having a C-shaped cross-section which is open outward are rigidly coupled, said profiled elements acting as guiding tracks for gliding rollers which are mounted in a cantilever fashion within the longitudinal members of the first frame half so as to allow the movement of one frame half with respect to the other.

5. The bed according to claim 4, **characterized in that** two wheels are supported on the heads of the longitudinal members of said second frame half, are aligned with said rails and are adapted to fit below them so as to allow to lift the strips supported by said first frame half and to insert the strips of said second frame half below said raised strips.

6. The bed according to claim 1, **characterized in that** it comprises means for locking one frame half with respect to the other frame half, which comprise a rod which is supported so that it can rotate within said second frame and has an arm which can move between two positions for engaging said first frame half which correspond to the extended and shortened conditions of said bed.
